# EUROPEAN PATENT SPECIFICATION

(11) **EP 4 086 500 B1**
(45) Date of publication and mention of the grant of the patent: **20.12.2023**
(21) Application number: 22382091.1
(22) Date of filing: 03.02.2022
(51) Int. Cl.: F16M 11/20, B66D 3/02, F16M 11/24, F16M 11/42

(54) **PORTABLE SUPPORT FOR HOIST OR TRACTION TOOLS**
TRAGBARE HALTERUNG FÜR HEBE- ODER ZUGWERKZEUGE
SUPPORT PORTATIF POUR TREUIL OU OUTILS DE TRACTION

(30) Priority: 05.05.2021 ES 202130398
(43) Date of publication of application: 09.11.2022
(73) Proprietor: Martech Group Equipments, S.L., 02007 Albacete (Albacete) (ES)
(72) Inventor: ALARCON PALACIOS, Víctor, 02007 Albacete (ES)
(74) Representative: Capitán García, Maria Nuria

(56) References cited:
- FR-A1- 2 110 281

## Description

### TECHNICAL FIELD OF THE INVENTION

The present invention relates to a support device for hoist or traction tools, for example, those used in automotive workshops, which is designed in a portable manner for it to be easily moved and located within the workshop.

### BACKGROUND OF THE INVENTION

Supports for hoist or traction tools are known, of those used, for example, in automotive workshops, which include a base on which a vertical column is fastened to which a hoist or traction tool to be used is coupled. The base can comprise one or more heavy elements, which keep the support device immobile on a support surface, for example, the floor of a workshop, while the hoist or traction tool is actuated, for example, to pull a heavy part or element towards the support device.

These known supports have the drawback that moving them to change their location is very cumbersome, due to the very heavy elements of their base, which make moving them difficult. In addition, on the other hand, if the weight of such elements is reduced to make moving them easier, the maximum value of the traction force to be exerted with the hoist or traction tool is limited, thus reducing the working capacity of such tool.

It is thus required to design a support for hoist or traction tools that is portable, i.e., that can be easily moved and located in different places where it is required for the use of a hoist or traction tool.

Patent with publication number FR2110281A3 discloses a portable traction device which is especially adapted for use in automobile repair work, comprises a column which can pivot on a base having a rubber seal in contact with the ground on its lower surface, a vacuum pump is connected to the space this surrounds by the joint so that the base is held in place on the floor, two wheels are mounted on one side of the base and serve to move the device. The traction direction is only provided by the orientation of the column or the height of a traction tool on said column.

### DESCRIPTION OF THE INVENTION

The present invention is a portable support for hoist or traction tools.

The mobile support comprises:
- a base, adapted to be rigidly and removably fastened on a support surface, and
- a column, which is fastened at a third end to a first surface of the base, where the column is configured in such a way that a hoist or traction tool can be coupled to it.

In addition, the support comprises a flexible perimeter rim fastened and extending from a second surface of the base, in such a way that, during the use of the support, said flexible perimeter rim is arranged between the base and the support surface, forming a closed space. In other words, the base is supported on the support surface, for example, the floor of a workshop, by means of the flexible perimeter rim, which acts as a seal or joint between the base and the support surface, forming the closed space.

The support additionally comprises a vacuum generating means in fluid communication with the closed space formed, by means of a vacuum line or pipe that is connected to a perforation in the base, such that a vacuum or negative pressure generated by the vacuum generating means creates such a depression or reduction of pressure inside the closed space that it produces a rigid fastening of the base to the support surface, suitable for actuating the hoist or traction tool coupled to the column of the support.

For example, the vacuum generating means could be configured to create a vacuum pressure of 88 kPa in the closed space formed between the base and the support surface, such that the fastening achieved between such base and support surface supports a maximum traction force of the hoist or traction tool of 2500 Kg, achieving more than enough traction capacity for, for example, repair tasks in an automotive workshop that require it.

Besides, the third end of the column is fastened to the first surface of the base by means of plates longitudinally fastened to the base, where the plates are arranged parallel to each other and extended perpendicular to a longitudinal plane of the base, such that the column is adapted to fit between the plates and be fastened to said plates through removable fastening means that are adapted to pass through first and third holes of the third end of the column and of the plates respectively; the hoist or traction tool is a flexible element.

Also, the plates comprise respective rows of fourth holes, a return pulley or, wherein the column is arranged parallel with respect to the base, a directing element is arranged between two facing fourth holes of the respective plates, so that a position of the return pulley or the directing element can be varied with respect to the base, the hoist or traction tool passes between the return pulley and the base towards the outside of the support or passes over the directing element to change its direction.

Thus, it is possible to have a portable support for hoist or traction tools, which can be easily moved and located in the required place with the simple actuation of the vacuum generating means, which allows the base to be very easily fastened rigidly to the support surface with the actuation of the vacuum generating means, or, such base can be easily decoupled from the support surface when said vacuum generating means is no longer activated, with a view to moving and locating the support in another place where the support is required to be relocated.

With the return pulley or the directing element is achieved that the free end of the hoist or traction tool acquires the desired direction, that is, it is possible to redirect the pull direction of the hoist or traction tool according to the specific need of the case. Specifically, in its use in vehicle sheet metal repair workshops, this is especially significant given that the sheet metal of a vehicle acquires different orientations and curvatures that make it necessary to adapt to them and in each case the pull direction to proceed with the sheet metal repair, usually to repair different dents.

In addition, the option where the column (2) is arranged parallel to the base (1) has the added advantage of making the support be approximately in the same plane, which facilitates its storage.

### BRIEF DESCRIPTION OF THE DRAWINGS

This specification is supplemented by a set of figures illustrating the preferred embodiment and never intended to limit the invention.
Figure 1 represents a perspective view of the mobile support for hoist or traction tools, with the column arranged perpendicular to the base.
Figure 2 represents a top perspective view of the base of the support of Figure 1.
Figure 3 represents a diagram of the installation of a vacuum ejector as a vacuum generating means in the support of Figure 1.
Figure 4 represents a perspective view of the mobile support for hoist or traction tools, with the column arranged angled with respect to the base.
Figure 5 represents a perspective view of the mobile support for hoist or traction tools, with the column arranged parallel to the base.
Figures 6A, 6B, 6C, 6D and 6E represent schematic side views of different arrangements of the mobile support.

### DETAILED DESCRIPTION OF THE INVENTION

In view of the foregoing, the present invention refers to a portable support for hoist or traction tools, for example, those used in automotive workshops.

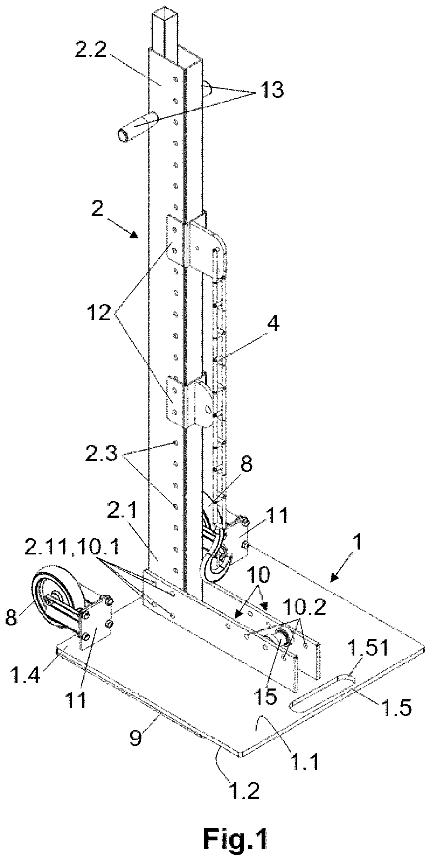

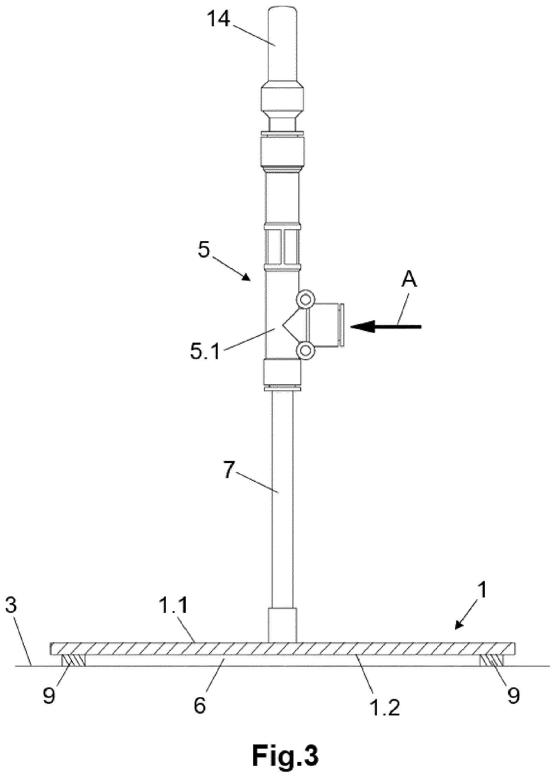

As shown in Figure 1, the device comprises:
- a base (1), adapted to be rigidly and removably fastened on a support surface (3), Figure 3, and
- a column (2), which is fastened at a third end (2.1) to a first surface (1.1) of the base (1).

For example, said base (1) and column (2) can be made of aluminium or steel.

The third end (2.1) of the column (2) is fastened to the first surface (1.1) of the base (1) by means of plates (10) fastened longitudinally to the base (1). In said base (1), the plates (10) are arranged parallel to each other and extended perpendicularly to a longitudinal plane of the base (1), such that the column (2) is adapted to fit between the plates (10) and to be fastened to them through known removable fastening means (not shown in the figures), such as a screw-nut assembly or the like, which are adapted to pass through first (2.11) and third holes (10.1) of the third end (2.1) of the column (2) and of the plates (10) respectively. Additionally, the plates (10) comprise respective rows of fourth holes (10.2), so that a fastening position of the column (2) can be varied with respect to the base (1), as required.

Likewise, the column (2) is configured such that a hoist or traction tool (4) can be coupled to it by means of second fastening means (not shown in the figures) of a coupling part (12) of the hoist or traction tool (4), said second fastening means being of any known type that allow them to be placed at a certain height of the column (2), convenient for the correct operation of the hoist or traction tool (4). For example, the column (2) could comprise a row of second holes (2.3) adapted to be passed through by the second fastening means, which could be, for example, a screw-nut assembly or the like.

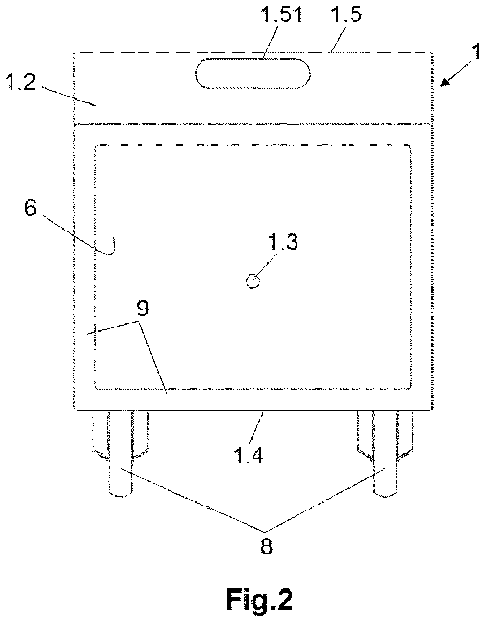

On the other hand, as shown in Figure 2, the support comprises a flexible perimeter rim (9), for example, made of rubber or similar material, fastened and extended from a second surface (1.2) of the base (1). The first and second surfaces (1.1, 1.2) are the largest opposite surfaces of the base (1). In use of the support, i.e., when it is required to fasten the base (1) to the support surface (3), see Figure 3, said flexible perimeter rim (9) is arranged between the base (1) and the support surface (3), forming a closed space (6) between said elements (1, 9, 3).

Preferably, the support surface (3) is a flat surface, without scratches or cracks, as well as free of dirt and dust. For example, it could be the floor of a workshop that meets such conditions.

Additionally, the support comprises a vacuum generating means (5), for example, as shown in Figure 3, a vacuum ejector (5.1), in fluid communication with the closed space (6) by means of a vacuum line or pipe (7) that is connected to a perforation (1.3) of the base (1), such that a vacuum generated by the vacuum generating means (5) produces the rigid fastening of the base (1) to the support surface (3).

The vacuum ejector (5.1) is fed by a stream of pressurised air (A), and at its outlet, comprises a silencer (14), such that said stream of pressurised air (A), due to the "Venturi" effect caused inside the vacuum ejector (5.1), creates such depression or vacuum pressure in the closed space (6) that it produces the rigid fastening of the base (1) to the support surface (3).

The vacuum generating means (5) could be fastened to the base (1) or to the column (2). Likewise, it can be of any known type, such as a vacuum compressor or vacuum pump with 220 V electrical drive.

For example, in a preferred embodiment of the support, the latter is designed with a vacuum generating means (5) adapted to create a vacuum pressure of 88 kPa in the closed space (6), where said vacuum pressure value corresponds to a maximum traction force of the hoist or traction tool (4) of 2500 Kg, which is more than enough, for example, for repair work carried out in an automotive workshop that requires the use of a hoist or traction tool (4). However, supports according to the present invention could be designed with greater capacity to withstand higher traction forces.

Thus, a support for hoist or traction tools (4) that is portable and as effective as known supports, which require moving heavy weights to move them. The support of the present invention can be easily moved and located from one place to another as required. Its operation is based on the simple actuation of the vacuum generating means (5) with the stream of pressurised air (A), when the base (1) is required to be rigidly fastened to the support surface (3), in such a way that it allows to support the traction force exerted by the hoist or traction tool (4) during its use; and then, when the support is to be moved to another place where it is to be relocated, the base (1) can be easily uncoupled from the support surface (3), by simply stopping activating the vacuum generating means (5).

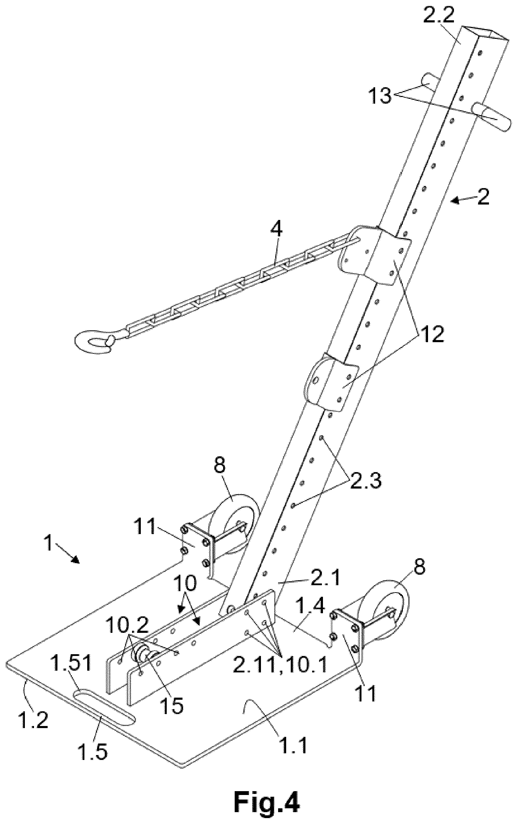

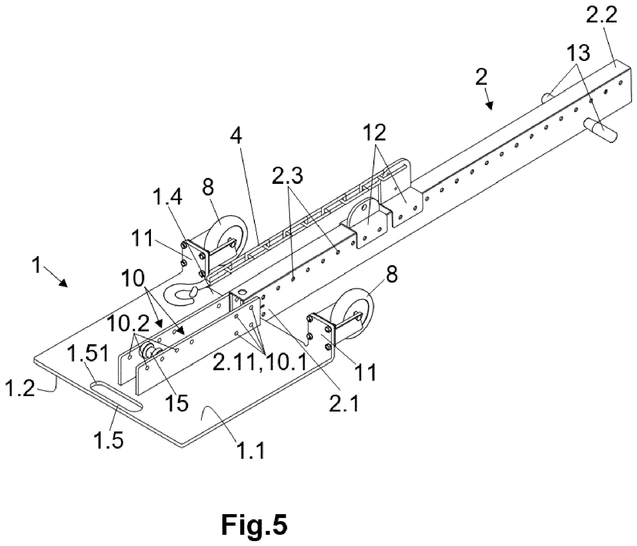

To make it easier to move the support from one location to another, or its transfer for storage, the support may comprise wheels (8) arranged at a first end (1.4) of the base (1). As shown in Figure 1, it is preferred that the wheels (8) are arranged perpendicular to a longitudinal plane of the base (1). For example, the wheels (8) could be fastened to the first surface (1.1) of the base (1) by means of respective flat plates (11), or with an "L" profile (embodiment not shown in the figures), for example, welded at one of its ends to said first surface (1.1) of the base (1), or as an extension of the base (1), Figures 4 and 5.

For the same purpose, additionally, a fourth end (2.2) of the column (2) could comprise handles (13), for example, arranged on the respective sides of the column (2).

Thus, a user who wishes to move the support from one location to another simply positions himself in front of the support, on the side of the first end (1.4) of its base (1), and pulls on the handles (13) towards himself, so that it pivots the base (1) of the support on the wheels (8), and with this, the support is free for easy movement.

Additionally, a second end (1.5) of the base (1) could be designed comprising an oblong hole (1.51) as a gripper, so that, by hoist said gripper, the user can easily uncouple the base (1) from the support surface (3), when the vacuum generating means (5) is no longer actuated, for example, to then pull on the handles (13) with less effort, and achieve movement of the support.

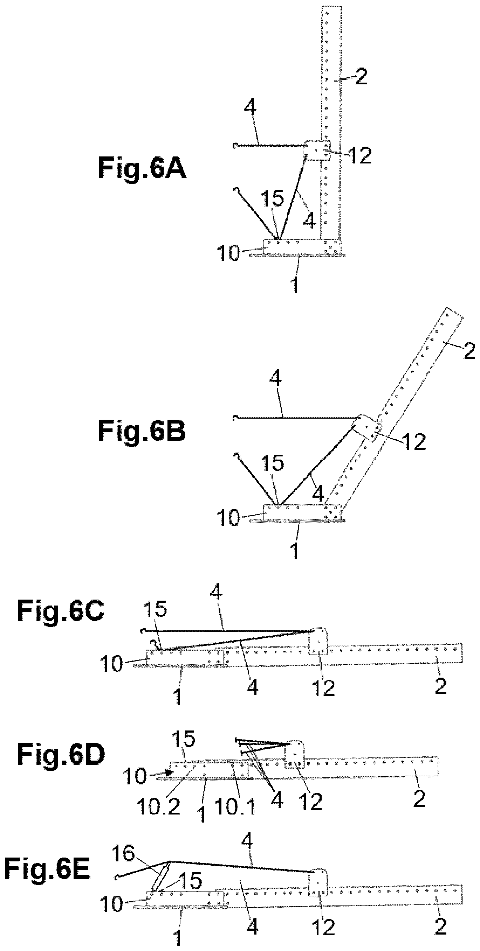

Another feature of the support is that, when the plates (10) comprise respective rows of fourth holes (10.2), the hoist or traction tool (4) can be a flexible element, such as the chain of Figures 1, 4 and 5 or any other flexible element -cable, rope, etc.- as shown generically in Figures 6A to 6E, a return pulley (15) is arranged between two facing fourth holes (10.2) on respective plates (10), four in the embodiments of Figures 1, 4, 5, 6A to 6E, so that a position of the return pulley (15) can be varied with respect to the base (1), by simply arranging it in one or other facing fourth holes (10.2), the hoist or traction tool (4) passes between the return pulley (15) and the base (1) towards the outside of the support, as can be seen in Figures 6A to 6C.

With a similar effect, there is the option of the column (2) being arranged perpendicular, Figures 1 and 6A, angled, Figures 4 and 6B, or parallel, Figures 5 and 6C, with respect to the base (1). The support includes all the elements mentioned, except that the column (2) acquires a different orientation with respect to the base (1), thus being able to adapt to optimise the pull direction and force of the hoist or traction tool (4).

As previously mentioned, the third holes (10.1) serve to fasten the column (2) between the plates (10). This is not represented in the figures for when the column (2) is arranged perpendicular or angled with respect to the base (1); it is represented in Figure 6D when it is arranged parallel with respect to the base (1). In said Figure 6D, the hoist or traction tool (4) has been partially represented in the possible orientations of the other Figures 6A to 6C and 6E which are discussed below.

Figure 6E shows where the column (2) is arranged parallel with respect to the base (1), the hoist or traction tool (4) is a flexible element, a directing element (16) is arranged between two facing fourth holes (10.2) of the respective plates (10), so that a position of the directing element (16) can be varied with respect to the base (1), the hoist or traction tool (4) passes over said directing element (16) to change its direction.

Although not shown in the figures, two supports can be located on opposite sides of the workpiece to exert a pull and have an opposing or counter-hoist resistant element, this is sometimes done on opposite sides of a vehicle body.

Usually the support surface (3) or floor on which the support is arranged is more or less horizontal. However, said support surface (3) could have any orientation or even be vertical, like the wall of a workshop, and the support shown here would be equally valid and operate in the manner explained here, highlighting that it may even be advantageous to obtain different directions, and resulting pull forces of the hoist or traction tool (4).

## Claims

1. Portable support for hoist or traction tools, comprising:
- a base (1), adapted to be rigidly and removably fastened on a support surface (3), and
- a column (2), which is fastened at a third end (2.1) to a first surface (1.1) of the base (1), where the column (2) is configured in such a way that a hoist or traction tool (4) can be coupled to it,
wherein it comprises a flexible perimeter rim (9) fastened and extended from a second surface (1.2) of the base (1), in such a way that, in use, said flexible perimeter rim (9) is arranged between the base (1) and the support surface (3) forming a closed space (6); and a vacuum generating means (5) in fluid communication with the closed space (6) by means of a vacuum line or pipe (7) that is connected to a perforation (1.3) of the base (1), such that, a vacuum generated by the vacuum generating means (5) produces the rigid fastening of the base (1) to the support surface (3), wherein the third end (2.1) of the column (2) is fastened to the first surface (1.1) of the base (1) by means of plates (10) longitudinally fastened to the base (1), where the plates (10) are arranged parallel to each other and extended perpendicular to a longitudinal plane of the base (1), such that the column (2) is adapted to fit between the plates (10) and be fastened to said plates (10) through removable fastening means that are adapted to pass through first (2.11) and third holes (10.1) of the third end (2.1) of the column (2) and of the plates (10) respectively; the hoist or traction tool (4) is a flexible element; **characterised in that** the plates (10) comprise respective rows of fourth holes (10.2), a return pulley (15) is arranged between two facing fourth holes (10.2) of the respective plates (10) or, wherein the column (2) is arranged parallel with respect to the base (1), a directing element (16) is arranged between two facing fourth holes (10.2) of the respective plates (10), so that a position of the return pulley (15) or the directing element (16) can be varied with respect to the base (1), the hoist or traction tool (4) passes between the return pulley (15) and the base (1) towards the outside of the support or passes over the directing element (16) to change its direction.

2. Support according to claim 1, wherein the vacuum generating means (5) is suitable for creating a vacuum pressure of 88 kPa in the closed space (6), which corresponds to a maximum traction force of the hoist or traction tool (4) of 2500 Kg.

3. Support according to any of claims 1 or 2, wherein the vacuum generating means (5) is a vacuum ejector (5.1).

4. Support according to claim 1, comprising wheels (8) arranged at a first end (1.4) of the base (1), perpendicularly to a longitudinal plane of the base (1).

5. Support according to claim 1, wherein a second end (1.5) of the base (1) comprises an oblong hole (1.51) as a gripper.

6. Support according to claim 1, wherein the plates (10) comprise respective rows of fourth holes (10.2), such that a fastening position of the column (2) can be varied with respect to the base (1).

7. Support according to claim 1, comprising second means for fastening a coupling part (12) of the hoist or traction tool (4) at a certain height of the column (2).

8. Support according to claim 7, wherein the column (2) comprises a row of second holes (2.3) adapted to be passed through by the second fastening means of the coupling part (12).

9. Support according to claim 1, wherein a fourth end (2.2) of the column (2) comprises handles (13).

10. Support according to claim 1, wherein the base (1) and the column (2) are made of aluminium or steel.

11. Support according to any of the previous claims, wherein the column (2) is arranged perpendicular, angled or parallel with respect to the base (1).

12. Support according to claim 1, wherein the vacuum generating means (5) are an electrical vacuum compressor or vacuum pump.

## Patentansprüche

1. Tragbare Halterung für Hebe- oder Zugwerkzeuge, umfassend:
- eine Basis (1), die dazu eingerichtet ist, starr und abnehmbar auf einer Haltefläche (3) befestigt zu werden, und
- eine Säule (2), die an einem dritten Ende (2.1) an einer ersten Fläche (1.1) der Basis (1) befestigt ist, wobei die Säule (2) so ausgebildet ist, dass ein Hebe- oder Zugwerkzeug (4) an sie angekoppelt werden kann,
wobei sie einen flexiblen Umfangsrand (9) umfasst, der an einer zweiten Fläche (1.2) der Basis (1) befestigt ist und sich von dieser aus erstreckt, so dass der flexible Umfangsrand (9) im Gebrauch zwischen der Basis (1) und der Haltefläche (3) angeordnet ist und dabei einen geschlossenen Raum (6) ausbildet; und eine Vakuumerzeugungseinrichtung (5), die mit dem geschlossenen Raum (6) über eine Vakuumleitung oder ein - rohr (7) in Fluidverbindung steht, die/das mit einer Perforation (1.3) der Basis (1) verbunden ist, so dass ein durch die Vakuumerzeugungseinrichtung (5) erzeugtes Vakuum die starre Befestigung der Basis (1) an der Haltefläche (3) bewirkt, wobei das dritte Ende (2.1) der Säule (2) an der ersten Fläche (1.1) der Basis (1) mittels Platten (10) befestigt ist, die in Längsrichtung an der Basis (1) befestigt sind, wobei die Platten (10) parallel zueinander angeordnet sind und sich senkrecht zu einer Längsebene der Basis (1) erstrecken, so dass die Säule (2) dazu eingerichtet ist, zwischen die Platten (10) zu passen und an den Platten (10) über abnehmbare Befestigungsmittel befestigt zu werden, die dazu eingerichtet sind, durch erste (2.11) und dritte Löcher (10.1) des dritten Endes (2.1) der Säule (2) bzw. der Platten (10) hindurchzugehen; wobei das Hebe- oder Zugwerkzeug (4) ein flexibles Element ist; **dadurch gekennzeichnet, dass** die Platten (10) entsprechende Reihen von vierten Löchern (10.2) umfassen, eine Umlenkrolle (15) zwischen zwei einander zugewandten vierten Löchern (10.2) der jeweiligen Platten (10) angeordnet ist oder, wobei die Säule (2) parallel in Bezug auf die Basis (1) angeordnet ist, ein Führungselement (16) zwischen zwei einander zugewandten vierten Löchern (10.2) der jeweiligen Platten (10) angeordnet ist, so dass eine Position der Umlenkrolle (15) oder des Führungselements (16) in Bezug auf die Basis (1) angepasst werden kann, das Hebe- oder Zugwerkzeug (4) zwischen der Umlenkrolle (15) und der Basis (1) zur Außenseite der Halterung hin durchgeht oder das Führungselement (16) übergeht, um seine Richtung zu ändern.

2. Halterung nach Anspruch 1, wobei die Vakuumerzeugungseinrichtung (5) geeignet ist, in dem geschlossenen Raum (6) einen Unterdruck von 88 kPa zu erzeugen, was einer maximalen Zugkraft des Hebe- oder Zugwerkzeugs (4) von 2500 kg entspricht.

3. Halterung nach einem der Ansprüche 1 oder 2, wobei die Vakuumerzeugungseinrichtung (5) ein Vakuumejektor (5.1) ist.

4. Halterung nach Anspruch 1, umfassend Räder (8), die an einem ersten Ende (1.4) der Basis (1) senkrecht zu einer Längsebene der Basis (1) angeordnet sind.

5. Halterung nach Anspruch 1, wobei ein zweites Ende (1.5) der Basis (1) ein Langloch (1.51) als Greifer umfasst.

6. Halterung nach Anspruch 1, wobei die Platten (10) jeweilige Reihen von vierten Löchern (10.2) umfassen, so dass eine Befestigungsposition der Säule (2) in Bezug auf die Basis (1) angepasst werden kann.

7. Halterung nach Anspruch 1, umfassend zweite Mittel zur Befestigung eines Kupplungsteils (12) des Hebe- oder Zugwerkzeugs (4) auf einer bestimmten Höhe der Säule (2).

8. Halterung nach Anspruch 7, wobei die Säule (2) eine Reihe von zweiten Löchern (2.3) umfasst, die dazu eingerichtet sind, von den zweiten Befestigungsmitteln des Kupplungsteils (12) durchdrungen zu werden.

9. Halterung nach Anspruch 1, wobei ein viertes Ende (2.2) der Säule (2) Griffe (13) umfasst.

10. Halterung nach Anspruch 1, wobei die Basis (1) und die Säule (2) aus Aluminium oder Stahl gefertigt sind.

11. Halterung nach einem der vorhergehenden Ansprüche, wobei die Säule (2) senkrecht, winklig oder parallel in Bezug auf die Basis (1) angeordnet ist.

12. Halterung nach Anspruch 1, wobei die Vakuumerzeugungseinrichtung (5) ein elektrischer Vakuumkompressor oder eine Vakuumpumpe ist.

## Revendications

1. Support portatif pour treuil ou outils de traction, comprenant :
- une base (1), adaptée pour être fixée de manière rigide et amovible sur une surface de support (3), et
- une colonne (2), qui est fixée au niveau d'une troisième extrémité (2.1) à une première surface (1.1) de la base (1), la colonne (2) étant configurée de telle manière qu'un treuil ou un outil de traction (4) peut y être couplé,
dans lequel il comprend un rebord périmétrique flexible (9) fixé et étendu à partir d'une seconde surface (1.2) de la base (1), de telle sorte que, en utilisation, ledit rebord périmétrique flexible (9) est disposé entre la base (1 ) et la surface de support (3) formant un espace fermé (6) ; et un moyen de génération de vide (5) en communication fluidique avec l'espace fermé (6) au moyen d'une conduite ou d'un tuyau de vide (7) qui est connecté à une perforation (1.3) de la base (1), de telle sorte qu'un vide généré par le moyen de génération de vide (5) produit la fixation rigide de la base (1) à la surface de support (3), dans lequel la troisième extrémité (2.1) de la colonne (2) est fixée à la première surface (1.1) de la base (1) au moyen de plaques (10) fixées longitudinalement à la base (1), où les plaques (10) sont disposées parallèlement les unes aux autres et s'étendent perpendiculairement à un plan longitudinal de la base (1), de telle sorte que la colonne (2) est adaptée pour s'ajuster entre les plaques (10) et être fixée auxdites plaques (10) par l'intermédiaire de moyens de fixation amovibles qui sont adaptés pour passer à travers les premier (2.11) et troisième trous (10.1) de la troisième extrémité (2.1) de la colonne (2) et des plaques (10) respectivement ; le treuil ou outil de traction (4) est un élément flexible ; **caractérisé en ce que** les plaques (10) comprennent des rangées respectives de quatrièmes trous (10.2), une poulie de renvoi (15) est disposée entre deux quatrièmes trous (10.2) en regard des plaques (10) respectives ou, dans lequel la colonne (2) est disposée parallèlement par rapport à la base (1), un élément directeur (16) est disposé entre deux quatrièmes trous (10.2) opposés des plaques (10) respectives, de sorte qu'une position de la poulie de renvoi (15) ou de l'élément directeur (16) peut être variée par rapport à la base (1), le treuil ou outil de traction (4) passe entre la poulie de renvoi (15) et la base (1) vers l'extérieur du support ou passe sur l'élément directeur (16) pour changer sa direction.

2. Support selon la revendication 1, dans lequel le moyen de génération de vide (5) est adapté pour créer une pression de vide de 88 kPa dans l'espace fermé (6), ce qui correspond à une force de traction maximale du treuil ou de l'outil de traction (4) de 2 500 Kg.

3. Support selon l'une quelconque des revendications 1 ou 2, dans lequel le moyen de génération de vide (5) est un éjecteur à vide (5.1).

4. Support selon la revendication 1, comprenant des roulettes (8) disposées au niveau d'une première extrémité (1.4) de la base (1), perpendiculairement à un plan longitudinal de la base (1).

5. Support selon la revendication 1, dans lequel une deuxième extrémité (1.5) de la base (1) comprend un trou oblong (1.51) faisant office de pince.

6. Support selon la revendication 1, dans lequel les plaques (10) comportent des rangées respectives de quatrièmes trous (10.2), de telle sorte qu'une position de fixation de la colonne (2) peut être variée par rapport à la base (1).

7. Support selon la revendication 1, comprenant de seconds moyens de fixation d'une pièce d'accouplement (12) du treuil ou outil de traction (4) à une certaine hauteur de la colonne (2).

8. Support selon la revendication 7, dans lequel la colonne (2) comprend une rangée de seconds trous (2.3) adaptés pour être traversés par les seconds moyens de fixation de la pièce d'accouplement (12).

9. Support selon la revendication 1, dans lequel une quatrième extrémité (2.2) de la colonne (2) comprend des poignées (13).

10. Support selon la revendication 1, dans lequel la base (1) et la colonne (2) sont en aluminium ou en acier.

11. Support selon l'une quelconque des revendications précédentes, dans lequel la colonne (2) est disposée perpendiculairement, en angle ou parallèlement par rapport à la base (1).

12. Support selon la revendication 1, dans lequel les moyens de génération de vide (5) sont un compresseur à vide électrique ou une pompe à vide.
